# FASCICULE DE BREVET EUROPEEN

(11) **EP 2 102 061 B1**
(45) Date de publication et mention de la délivrance du brevet: **07.07.2010**
(21) Numéro de dépôt: 07858440.6
(22) Date de dépôt: 15.10.2007
(51) Int. Cl.: B64D 29/06

(54) **NACELLE POUR TURBORÉACTEUR DOUBLE FLUX**
GONDEL FÜR ZWEISTROMTRIEBWERK
NACELLE FOR TURBOFAN

(30) Priorité: 13.12.2006 FR 0610850
(43) Date de publication de la demande: 23.09.2009
(73) Titulaire: Aircelle, 76700 Gonfreville L'Orcher (FR)
(72) Inventeur: VAUCHEL, Guy, Bernard, F-76600 Le Havre (FR)
(74) Mandataire: Gaillarde, Frédéric F. Ch.
(86) Numéro de dépôt international: PCT/FR2007/001678
(87) Numéro de publication internationale: WO 2008/093003

(56) Documents cités:
- EP-A1- 0 145 809
- FR-A- 1 095 605
- GB-A- 2 312 251

## Description

La présente invention se rapporte à une nacelle pour turboréacteur double flux.

Un avion est propulsé par plusieurs turboréacteurs logés chacun dans une nacelle abritant également un ensemble de dispositifs d'actionnement annexes liés à son fonctionnement, tel qu'un dispositif d'inversion de poussée, et assurant diverses fonctions lorsque le turboréacteur est en fonctionnement ou à l'arrêt.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur (ou une structure interne de la structure aval de la nacelle et entourant le turboréacteur) et une paroi interne de la nacelle. Les deux flux d'air sont éjectés du turboréacteur par l'arrière de la nacelle.

Chaque ensemble propulsif de l'avion est donc formé par une nacelle et un turboréacteur, et est suspendu à une structure fixe de l'avion, par exemple sous une aile ou sur le fuselage, par l'intermédiaire d'un pylône rattaché au turboréacteur dans sa partie avant et arrière par des suspensions.

Dans une telle configuration, c'est le turboréacteur qui supporte la nacelle. Une telle architecture est soumise à de nombreux efforts externes conjugués lors de la mission de l'avion. Il s'agit entre autre d'efforts résultants de la gravité, des efforts aérodynamiques externes et internes, rafales, effets thermiques.

Ces contraintes appliquées à l'ensemble propulsif sont transmises au turboréacteur et entraînent des déformées de carters qui impactent directement le rendement des différents étages du turboréacteur. Plus particulièrement, dans le cas d'un ensemble propulsif dit en taille de guêpe, c'est-à-dire présentant une partie aval longue et relativement fine par rapport aux structures intermédiaires et d'entrée d'air, ces contraintes résultent en une déformation particulièrement préjudiciable appelée « mise en banane », la partie aval se courbant de manière importante.

Une telle « mise en banane » se traduit par une déformation de la structure externe de la nacelle formée par les différents carters successifs tandis que l'arbre d'entraînement, les aubes de la soufflante et aubes internes du turboréacteur restent rectilignes. Il s'ensuit un rapprochement des têtes d'aubes de l'arbre vers la périphérie interne des carters. La performance générale du turboréacteur s'en trouve réduite par rapport à une configuration dans laquelle les carters ne subissent pas ou très peu de déformations, car il convient alors de tenir compte de cette déformation dans la conception de la nacelle de manière à toujours ménager un jeu suffisant entre les têtes d'aubes et la périphérie des carters. Ceci résulte en une partie de l'air d'alimentation qui n'est pas compressé par les aubes car fuyant à travers ce jeu important.

Une solution à ce problème a été proposée dans la demande de brevet français non encore publiée enregistrée sous le n°06.05912 au nom de la demanderesse. Les figures 1 et 2 du dessin en annexe rappellent l'objet de ce document FR 06.05912.

Le document EP O 145 809 décrit toutes les caractéristiques du préambule de la revendication 1.

La nacelle 1 illustrée sur ces figures est dite structurante, c'est-à-dire qu'elle supporte le moteur 7 et le relie directement à une structure fixe 2 d'un avion via un pylône 15 intégré à sa constitution. La section arrière de la nacelle comprend une ossature interne structurante 18 constituée de cadres radiaux 20 associés à des montants 22, des renforts longitudinaux 26, 27 associés à des structures longitudinales supérieures 23 et inférieures 24 complètent cette structure. De plus, un jeu de bielles de reprise de poussée 29 concourent au transit des efforts du moteur 7 vers la structure fixe 2 de l'avion. Un panneau de lissage aérodynamique et acoustique 21 est monté sur l'ossature 18 et entoure le moteur 7.

Pour qu'une telle conception de charpente structurelle soit qualifiable auprès des autorités de certification et soit parfaitement dimensionnée sans autre moyen de renforcement aléatoire, il est nécessaire de dissocier le panneau acoustique du passage des efforts du moteur vers l'avion. De plus, la structure du panneau acoustique et la structure environnante ne doivent pas être trop impactées en cas d'éclatement de tuyauterie de moteur.

La présente invention vise à atteindre ces objectifs et consiste à cet effet en une nacelle pour turboréacteur double flux comprenant une section avant d'entrée d'air, une section médiane destinée à entourer une soufflante du turboréacteur et une section arrière possédant des moyens d'accrochage à un pylône destiné à être lié à une structure fixe d'un avion, ladite section arrière comprenant une ossature structurante sur laquelle est monté au moins un panneau de lissage aérodynamique et acoustique, où ledit panneau acoustique est fixé sur l'ossature structurante par des moyens de fixation flottante ou élastique de manière à permettre au panneau acoustique de se déformer selon une direction sensiblement radiale centrifuge relativement au turboréacteur en présence d'air en surpression dans le compartiment moteur. Ainsi, le panneau acoustique ne transmet pas d'efforts provenant du turboréacteur vers la structure fixe de l'avion.

Lesdits moyens de fixation peuvent comprendre un écrou en regard d'un trou traversant l'ossature structurante, et prévu pour recevoir et retenir la queue d'une vis montée dans une douille de renfort logée dans un trou traversant le panneau acoustique.

Dans une forme de réalisation, la douille de renfort vient en contact direct avec l'ossature structurante, et la vis est montée avec un léger jeu dans la douille de renfort et présente une tête non conique, de manière à réaliser une fixation flottante du panneau acoustique sur l'ossature structurante.

Dans une autre forme de réalisation, la douille de renfort est associée à une bague élastique qui vient en contact avec l'ossature structurante.

Dans encore une autre forme de réalisation, ledit écrou comprend un socle fixé à l'ossature structurante et présentant un logement dans lequel l'écrou proprement dit est monté mobile en translation selon l'axe dudit trou traversant l'ossature structurante, un ressort de rappel étant prévu dans ce logement pour rappeler l'écrou proprement dit vers une position de repos à distance de l'ossature structurante. Ces dispositions permettent, en jouant sur la raideur du ressort ou le vissage de la vis, de moduler la fixation du panneau sur l'ossature pour le cas échéant évacuer une surpression d'air interne.

Le panneau acoustique peut être d'un seul tenant ou constitué de plusieurs éléments. Ceci englobe l'adaptation du panneau à une structure intérieure fixe comprenant des bifurcation ou son application à une structure de type O-duct.

Selon une possibilité, un matelas de protection thermique, prévu pour s'interposer entre l'ossature structurante et le panneau acoustique, est monté au moyen d'éléments de maintien sur le panneau acoustique. Ainsi, le panneau intègre sa propre protection thermique.

Le panneau acoustique peut comporter au moins deux fentes longitudinales d'éjection de l'air en surpression dans la nacelle. En ce cas, le matelas de protection thermique peut présenter, aux abords des fentes d'éjection, un recouvrement en tuile apte à autoriser une déformation du panneau sans affecter la protection thermique.

Selon un autre aspect de l'invention, le panneau peut comporter au moins une trappe de visite à' découpes rectilignes ou festonnées. Des joints d'étanchéité périphérique sont par exemple associés aux découpes de la ou des trappes de visite.

La mise en oeuvre de l'invention sera mieux comprise à l'aide de la description détaillée qui est exposée ci-dessous en regard du dessin annexé dans lequel :
- la figure 1 (déjà commentée en introduction) est une vue schématique en perspective d'une nacelle selon l'art antérieur;
- la figure 2 (déjà commentée en introduction) est une vue schématique en perspective, sous un autre angle, de la même nacelle;
- la figure 3 est une vue en coupe longitudinale partielle d'un exemple de nacelle selon l'invention, qui illustre le comportement de la structure d'un panneau acoustique en cas d'éclatement de tuyauterie du moteur;
- les figures 4 à 6 sont des vues similaires en perspective d'un premier, d'un deuxième et d'un troisième exemples de réalisation dudit panneau acoustique;
- la figure 7 est une vue en coupe selon la ligne VII-VII de la figure 6;
- les figures 8, 9, 10 et 11a sont des vues similaires, en coupe selon la ligne VIII-VIII de la figure 4, d'un premier, d'un deuxième, d'un troisième et d'un quatrième exemples de dispositif de fixation du panneau acoustique sur une ossature structurante de la nacelle;
- les figures 11b, 12 et 13 représentent trois configurations de fonctionnement d'un cinquième exemple de dispositif de fixation analogue à celui de la figure 11a;
- la figure 14 est une vue en coupe selon la ligne XIV-XIV. de la figure 5;
- les figures 15 et 16 sont deux vues, suivant la flèche XV de la figure 14, qui illustrent deux exemples de découpe d'une trappe de visite dans le panneau acoustique.

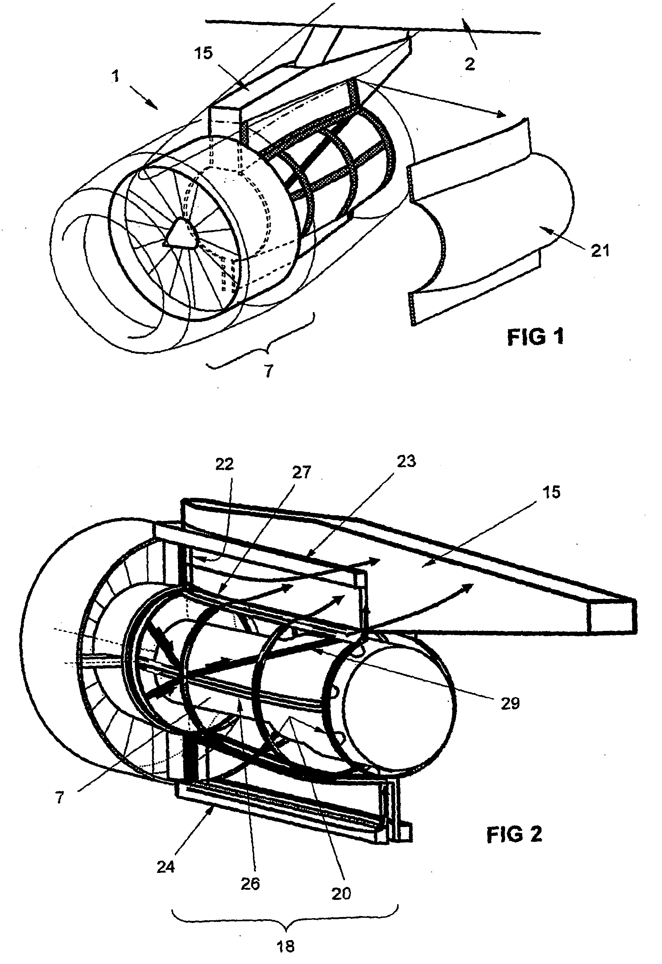

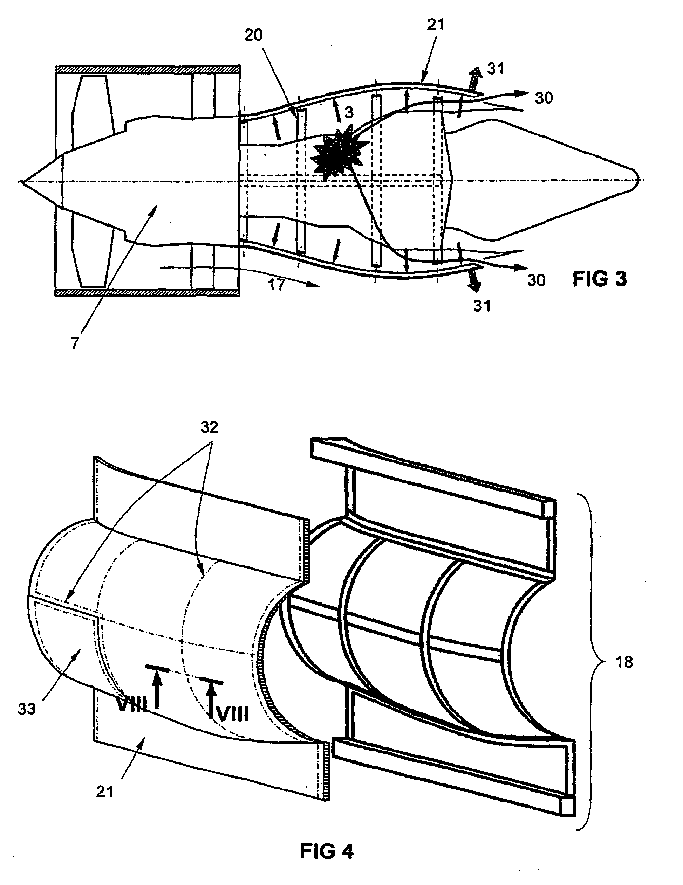

Certains des éléments représentés sur les figures 3 à 16 sont analogues à des éléments des figures 1 et 2 et sont désignés par les mêmes références. La nacelle selon l'invention se distingue essentiellement de celle illustrée sur les figures 1 et 2 en ce que le panneau acoustique 21 est fixé sur l'ossature structurante 18 par des moyens de fixation flottante ou élastique.

En cas d'éclatement d'une tuyauterie du moteur 7 par exemple (voir figure 3), le panneau 21 subit une pression uniforme 3 sur tout l'intérieur de sa structure et, grâce à ses moyens de fixation flottante ou élastique sur l'ossature 18, se déforme suivant une direction 31 sensiblement radiale centrifuge dans le sens d'une expansion de son volume interne, afin d'évacuer l'air en surpression 30 dans le compartiment moteur par l'arrière du panneau 21, sans endommager la structure de la nacelle 1 et le moteur 7. Ainsi, le panneau 21 ne transmet pas d'efforts provenant du turboréacteur 7 vers la structure fixe 2 de l'avion. L'attache amont du panneau 21 sur la structure du moteur 7 reste suffisamment compacte pour ne pas écoper l'air 17 venant de la soufflante dans le compartiment moteur et amplifier l'effet néfaste de la pressurisation.

Les figures 4 à 7 montrent des exemples de réalisation du panneau acoustique 21, dans lesquels le panneau 21 est constitué d'une virole centrale et de panneaux verticaux supérieur et inférieur. Le panneau acoustique 21 pourrait aussi être uniquement constitué d'une virole, ou d'une virole associée à un panneau vertical supérieur ou inférieur.

Les lignes de fixations 32 du panneau 21 de la figure 4 sont situées en vis-à-vis d'éléments structurels de l'ossature 18. Le nombre et l'emplacement des fixations sont définis par l'homme de métier en fonction des exigences dimensionnelles et géométriques de la structure globale.

Afin d'assurer une maintenance rapide et ciblée sur le moteur 7, une trappe de visite 33 amovible forme une partie amont du panneau 21. La trappe 33 est située au niveau d'une zone du moteur 7 à inspecter.

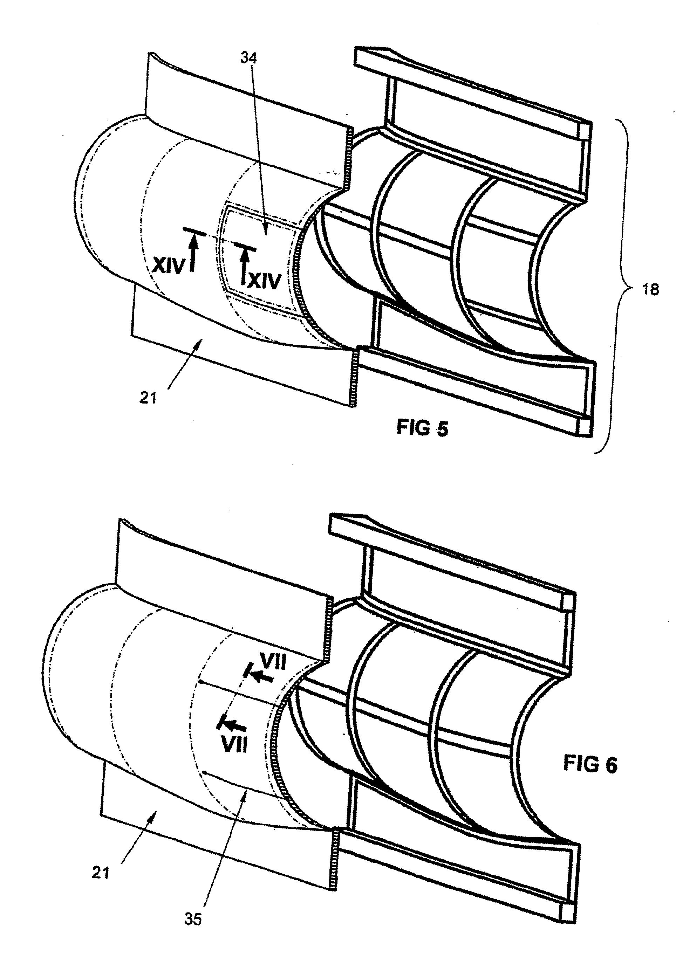

Sur la figure 5, le panneau acoustique 21 comporte une trappe de visite 34 située en aval et qui peut faire office de trappe de surpression et comporter à cet effet des fixations élastiques plus souples que pour le reste du panneau acoustique 21 afin de privilégier la sortie d'air dans cette zone.

La figure 6 représente un panneau acoustique 21 comportant en aval deux fentes longitudinales 35 prévues pour évacuer l'air en surpression dans la nacelle. Les fentes 35 comportent en extrémité des arrêts de crique. Ces fentes 35 sont disposées et orientées à la convenance de l'homme de métier, sans nécessité de recouvrement avec les éléments structurels de l'ossature 18.

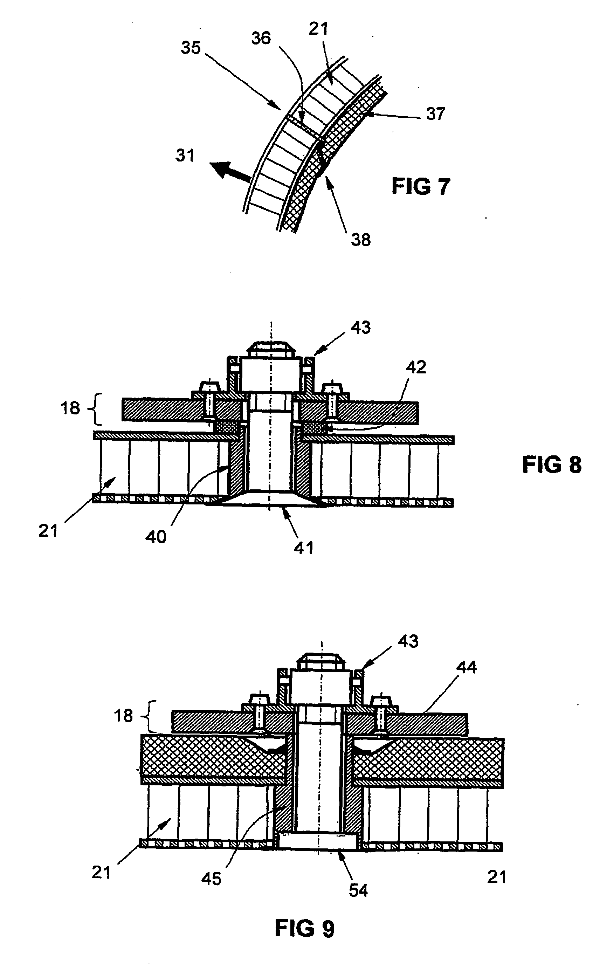

La figure 7 montre un exemple de réalisation d'une fente 35. Un joint d'étanchéité 36 lui est associé. Un matelas de protection thermique 37, prévu pour s'interposer entre l'ossature structurante 18 et le panneau acoustique 21, est monté sur le panneau acoustique 21. Le matelas 37 présente, aux abords de la fente d'éjection 35, un recouvrement en tuile 38 prévu pour autoriser une déformation locale du panneau 21 sans affecter la protection thermique. Ainsi, il suffit de prévoir des fixations élastiques en aval des fentes 35 pour permettre l'ouverture, par déformation dans le sens 31, de la région délimitée par les deux fentes 35 du panneau 21.

La figure 8 représente un dispositif de fixation souple du panneau acoustique 21 sur l'ossature 18. Dans cet exemple, le panneau acoustique 21 ne nécessite pas de protection thermique car il est réalisé en titane.

Ce dispositif de fixation élastique comprend un écrou 43 fixé en regard d'un trou traversant l'ossature structurante 18, et prévu pour recevoir et retenir la queue d'une vis 41 montée dans une douille de renfort local 40 logée dans un trou traversant le panneau acoustique 21. La douille de renfort 40 est associée à une rondelle en matière élastomère 42 interposée entre le panneau 21 et l'ossature structurante 18.

La douille de renfort 40 permet d'éviter que la vis 41 n'écrase la structuré interne du panneau 21. La douille 40 pourrait aussi être intégrée dans la structure même du panneau 21 au moyen d'un produit de remplissage de cellules du "nid d'abeille" constituant le panneau 21.

La figure 9 représente un deuxième exemple de dispositif de fixation du panneau acoustique 21 sur l'ossature 18. Comme sur la figure 8, un écrou 43 est fixé en regard d'un trou traversant l'ossature structurante 18, et prévu pour recevoir et retenir la queue d'une vis 54 montée dans une douille de renfort 45 logée dans un trou traversant le panneau acoustique 21. Ici, cependant, la vis 54 est montée avec un léger jeu dans la douille de renfort 45 et présente une tête non conique, de manière à réaliser une fixation flottante non élastique du panneau acoustique 21 sur l'ossature structurante 18.

Ce type de fixation peut être employé dans le cas d'un panneau acoustique ne nécessitant pas de protection thermique, ou bien nécessitant une protection thermique assurée par un panneau en aluminium 37.

La douille 45 n'est pas ici associée à un élément élastique mais vient en contact direct avec l'ossature 18. Un évidement annulaire est pratiqué dans le matelas de protection thermique 37 autour de cette douille 45; une rondelle à dents 44 disposée dans cet évidement annulaire assure le maintien du matelas 37 sur le panneau 21.

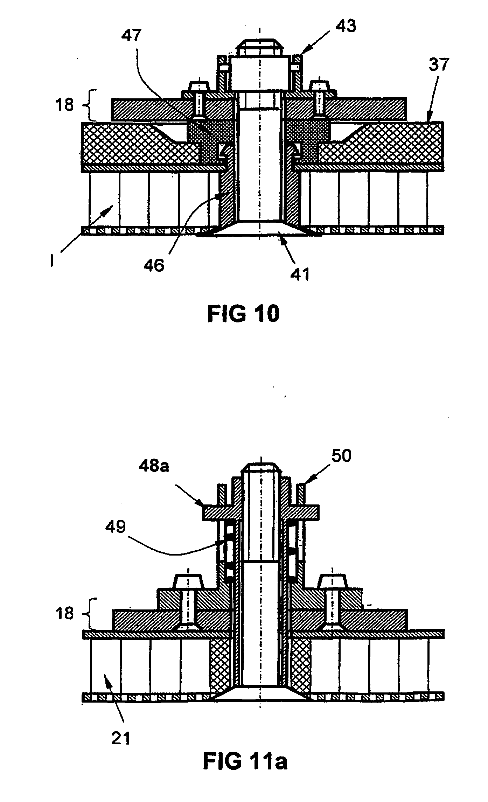

Le dispositif de fixation élastique illustré sur la figure 10 se distingue du précédent en ce que la douille de renfort 46 présente, à une extrémité, un ou plusieurs ergots de retenue d'une bague élastique 47 interposée entre le panneau 21 et l'ossature structurante 18. La bague élastique 47 présente en outre un épaulement annulaire prévu pour maintenir le matelas 37 contre le panneau 21.

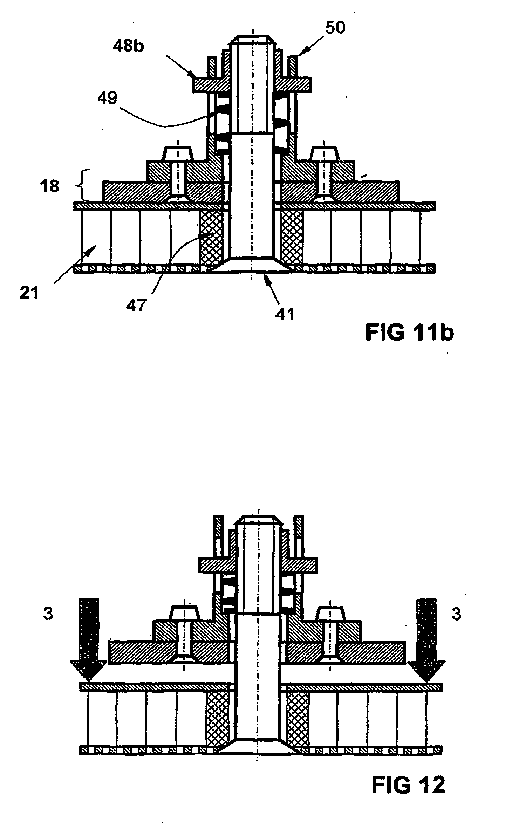

Les figures 11a, 11b, 12 et 13 représentent un autre dispositif de fixation élastique comprenant un ensemble d'écrou dont un socle 50 est fixé à l'ossature structurante 18 en regard d'un trou traversant cette dernière. Le socle 50 présente un logement dans lequel l'écrou proprement dit 48a ou 48b est monté mobile en translation selon l'axe du trou traversant l'ossature structurante 18. Un ressort de rappel 49 est prévu dans ce logement pour rappeler l'écrou 48a ou 48b vers une position de repos (voir figures 11 a et 11 b) à distance de l'ossature structurante 18.

Comme précédemment, l'écrou 48a ou 48b est prévu pour recevoir et retenir la queue d'une vis 41 montée dans une douille de renfort 47 logée dans un trou traversant le panneau acoustique 21. Ici, la douille de renfort 47 est intégrée au panneau acoustique 21. Selon la raideur du ressort 49, une tenue plus (p.ex. en amont du panneau 21) ou moins rigide (p.ex. en aval du panneau 21) de l'ensemble d'écrou peut être obtenue.

Sur la figure 11a, une butée de serrage de la vis 41 est incorporée dans l'écrou 48a. Il suffit de serrer jusqu'au contact pour s'assurer d'un bon montage. Pour assurer la tension différentielle nécessaire, le ressort 49 peut avoir plusieurs niveaux de raideur, ou l'écrou 53 peut être de différentes longueurs.

Sur la figure 11b, l'écrou 48b ne présente pas de butée de serrage de la vis 41. Un montage de la vis 41 en agissant sur le couple de serrage tend à donner plus ou moins de tension au ressort 49 en position de repos et permet ainsi le déplacement différentiel du panneau 21 sous pression.

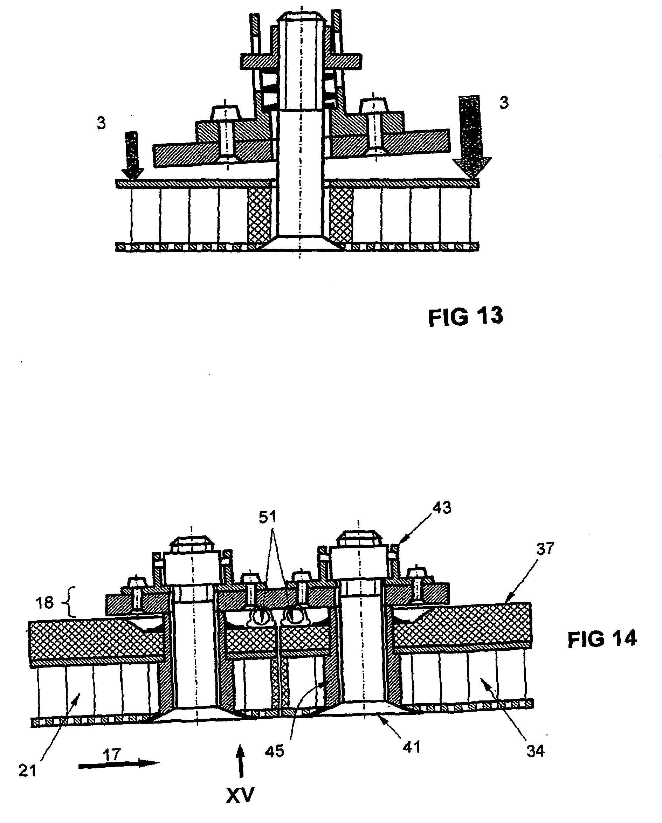

En cas de surpression, le panneau acoustique 21 subissant la pression d'air suivant les flèches 3 (voir figures 12 et 13) s'éloigne de l'ossature 18 et l'écrou 48b, tracté par la vis 41, coulisse dans son logement ménagé dans le socle 50, à l'encontre de l'action de rappel du ressort 49.

La figure 14 représente une zone de jonction entre le panneau 21 et sa trappe de visite 34. Deux joints d'étanchéité périphérique 51 sont montés entre l'ossature structurante 18 et le matelas de protection thermique 37 de part et d'autre de cette zone de jonction, afin de l'isoler du flux d'air 17 provenant de la soufflante du moteur 7.

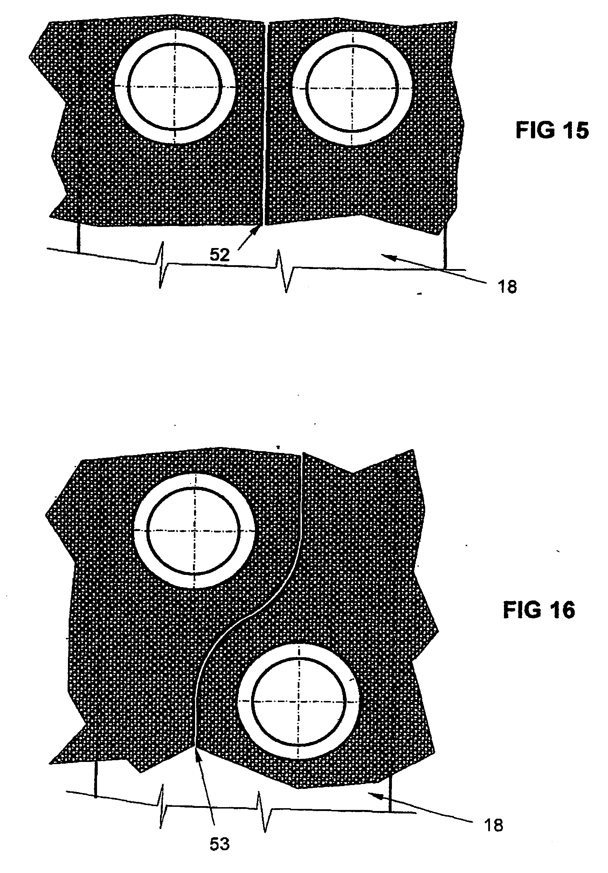

Comme indiqué sur les figures 15 et 16, les découpes 52 ou 53 de la trappe de visite 34 dans le panneau 21 peuvent être rectilignes (52), avec un jeu fonctionnel de montage, ou festonnées (53) pour optimiser la largeur de l'ossature 18.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (1) pour turboréacteur (7) double flux comprenant une section avant d'entrée d'air, une section médiane destinée à entourer une soufflante du turboréacteur (7) et une section arrière possédant des moyens d'accrochage (23) à un pylône (15) destiné à être lié à une structure fixe (2) d'un avion, ladite section arrière comprenant une ossature structurante (18) sur laquelle est monté au moins un panneau de lissage aérodynamique et acoustique (21), **caractérisée en ce que** ledit panneau acoustique (21) est fixé sur l'ossature structurante (18) par des moyens de fixation flottante ou élastique, de manière à permettre au panneau acoustique (21) de se déformer selon une direction (31) sensiblement radiale centrifuge relativement au turboréacteur (7) en présence d'air en surpression (3) dans le compartiment moteur.

2. Nacelle (1) selon la revendication 1, **caractérisée en ce que** lesdits moyens de fixation comprennent un écrou (43; 48a; 48b) en regard d'un trou traversant l'ossature structurante (18), et prévu pour recevoir et retenir la queue d'une vis (41; 54) montée dans une douille de renfort (40; 45; 46; 47) logée dans un trou traversant le panneau acoustique (21).

3. Nacelle (1) selon la revendication 2, **caractérisée en ce que** la douille de renfort (45) vient en contact direct avec l'ossature structurante (18), et **en ce que** la vis (54) est montée avec un léger jeu dans la douille de renfort (45) et présente une tête non conique, de manière à réaliser une fixation flottante du panneau acoustique (21) sur l'ossature structurante (18).

4. Nacelle (1) selon la revendication 2, **caractérisée en ce que** la douille de renfort (40; 46) est associée à une bague élastique (42; 47) qui vient en contact avec l'ossature structurante (18).

5. Nacelle (1) selon la revendication 2, **caractérisée en ce que** ledit écrou comprend un socle (50) fixé à l'ossature structurante (18) et présentant un logement dans lequel l'écrou proprement dit (48a; 48b) est monté mobile en translation selon l'axe dudit trou traversant l'ossature structurante (18), un ressort de rappel (49) étant prévu dans ce logement pour rappeler l'écrou proprement dit (48a; 48b) vers une position de repos à distance de l'ossature structurante (18).

6. Nacelle (1) selon l'une des revendications 1 à 5, **caractérisée en ce qu'**un matelas de protection thermique (37), prévu pour s'interposer entre l'ossature structurante (18) et le panneau acoustique (21), est monté au moyen d'éléments de maintien (44; 47) sur le panneau acoustique (21).

7. Nacelle (1) selon l'une des revendications 1 à 6, **caractérisée en ce que** le panneau acoustique (21) comporte au moins deux fentes longitudinales (35) d'éjection de l'air en surpression dans la nacelle.

8. Nacelle (1) selon la revendication 6 ou 7, **caractérisée en ce que** le matelas de protection thermique (37) présente, aux abords des fentes d'éjection (35) un recouvrement en tuile (38) apte à autoriser une déformation du panneau (21) sans affecter la protection thermique.

9. Nacelle (1) selon l'une des revendications 1 à 8, **caractérisée en ce que** le panneau (21) comporte au moins une trappe de visite (33, 34) à découpes rectilignes (52) ou festonnées (53).

10. Nacelle (1) selon la revendication 9, **caractérisée en ce que** des joints d'étanchéité périphérique (51) sont associés aux découpes (52; 53) de la ou des trappes de visite (33; 34).

## Claims

1. A nacelle (1) for a bypass turbofan (7) comprising a front air-intake section, a mid-section designed to surround a fan of the turbofan (7) and a rear section having means (23) for coupling to a mast (15) designed to be connected to a fixed structure (2) of an aircraft, said rear section comprising a structural framework (18) onto which is mounted at least one aerodynamic and acoustic smoothing panel (21), **characterized in that** said acoustic panel (21) is attached to the structural framework (18) by floating or elastic attachment means, so as to allow the acoustic panel (21) to deform in a substantially centrifigal radial direction (31) relative to the turbofan (7) in the presence of overpressurized air (3) in the engine compartment.

2. The nacelle (1) as claimed in claim 1, **characterized in that** said attachment means comprise a nut (43; 48a; 48b) facing a hole passing through the structural framework (18), and designed to receive and retain the shank of a screw (41; 54) mounted in a reinforcing bush (40; 45; 46; 47) housed in a hole passing through the acoustic panel (21).

3. The nacelle (1) as claimed in claim 2, **characterized in that** the reinforcing bush (45) comes into direct contact with the structural framework (18), and **in that** the screw (54) is mounted with a slight clearance in the reinforcing bush (45) and has a nonconical head, so as to produce a floating attachment of the acoustic panel (21) to the structural framework (18).

4. The nacelle (1) as claimed in claim 2, **characterized in that** the reinforcing bush (40; 46) is associated with an elastic ring (42; 47) which comes into contact with the structural framework (18).

5. The nacelle (1) as claimed in claim 2, **characterized in that** said nut comprises a base (50) attached to the structural framework (18) and having a housing in which the nut itself (48a; 48b) is mounted so as to move in translation on the axis of said hole passing through the structural framework (18), a return spring (49) being provided in this housing in order to return the nut itself (48a; 48b) to a rest position at a distance from the structural framework (18).

6. The nacelle (1) as claimed in one of claims 1 to 5, **characterized in that** a heat-protection mat (37), designed to be interposed between the structural framework (18) and the acoustic panel (21), is mounted by means of retention elements (44; 47) on the acoustic panel (21).

7. The nacelle (1) as claimed in one of claims 1 to 6, **characterized in that** the acoustic panel (21) comprises at least two longitudinal slots (35) for discharging the overpressurized air in the nacelle.

8. The nacelle (1) as claimed in claim 6 or 7, **characterized in that** the heat-protection mat (37) has, in the vicinity of the discharge slots (35) a tile-like overlap (38) capable of allowing a deformation of the panel (21) without affecting the heat protection.

9. The nacelle (1) as claimed in one of claims 1 to 8, **characterized in that** the panel (21) comprises at least one inspection hatch (33, 34) with rectilinear cutouts (52) or scalloped cutouts (53).

10. The nacelle (1) as claimed in claim 9, **characterized in that** peripheral seals (51) are associated with the cutouts (52; 53) of the inspection hatch or hatches (33; 34).

## Patentansprüche

1. Gondel (1) für Mantelstromtriebwerk (7), umfassend einen vorderen Lufteinlassabschnitt, einen mittleren Abschnitt, der dazu gedacht ist, ein Gebläse des Triebwerks (7) zu umgeben, und einen hinteren Abschnitt, der Mittel (23) zum Aufhängen an einer Triebwerkaufhängung (15) besitzt, der dazu gedacht ist, an einer ortsfesten Struktur (2) eines Flugzeugs befestigt zu werden, wobei der hintere Abschnitt einen Strukturrahmen (18) umfasst, auf dem mindestens eine aerodynamische Glättungsplatte und Akustikplatte (21) montiert ist, **dadurch gekennzeichnet, dass** die Akustikplatte (21) an dem Strukturrahmen (18) über schwimmende oder elastische Befestigungsmittel befestigt ist, um es der Akustikplatte (21) zu ermöglichen, sich in einer Richtung (31) zu verformen, die im Verhältnis zu dem Triebwerk (7) im Wesentlichen radial zentrifugal ist, wenn im Motorraum Überdruckluft (3) vorliegt.

2. Gondel (1) nach Anspruch 1, **dadurch gekennzeichnet, dass** die Befestigungsmittel eine Mutter (43; 48a; 48b) gegenüber einem Loch, das durch den Strukturrahmen (18) geht, umfassen, und die bereitgestellt wird, um das Endstück einer Schraube (41; 54) aufzunehmen und festzuhalten, die in einer Verstärkungshülse (40; 45; 46; 47) montiert ist, die in einem Loch, das durch die Akustikplatte (21) geht, untergebracht ist.

3. Gondel (1) nach Anspruch 2, **dadurch gekennzeichnet, dass** die Verstärkungshülse (45) direkt mit dem Strukturrahmen (18) in Berührung kommt, und dass die Schraube (54) mit etwas Spiel in der Verstärkungshülse (45) montiert ist und einen nicht kegelförmigen Kopf aufweist, um eine schwimmende Befestigung der Akustikplatte (21) auf dem Strukturrahmen (18) auszubilden.

4. Gondel (1) nach Anspruch 2, **dadurch gekennzeichnet, dass** die Verstärkungshülse (40; 46) mit einem elastischen Ring (42; 47) verknüpft ist, der mit dem Strukturrahmen (18) in Berührung kommt.

5. Gondel (1) nach Anspruch 2, **dadurch gekennzeichnet, dass** die Mutter eine Unterlage (50) umfasst, die an dem Strukturrahmen (18) befestigt ist und eine Aufnahme aufweist, in der die eigentliche Mutter (48a; 48b) an der Achse des Lochs, das durch den Strukturrahmen (18) geht, entlang translationsmäßig bewegbar ist, wobei eine Rückstellfeder (49) in dieser Aufnahme bereitgestellt wird, um die eigentliche Mutter (48a; 48b) in eine Ruheposition von dem Strukturrahmen (18) entfernt zurückzustellen.

6. Gondel (1) nach einem der Ansprüche 1 bis 5, **dadurch gekennzeichnet, dass** eine Wärmeschutzeinlage (37), die bereitgestellt wird, um zwischen dem Strukturrahmen (18) und der Akustikplatte (21) eingeschoben zu werden, anhand von Halteelementen (44; 47) auf der Akustikplatte (21) montiert ist.

7. Gondel (1) nach einem der Ansprüche 1 bis 6, **dadurch gekennzeichnet, dass** die Akustikplatte (21) mindestens zwei längliche Schlitze (35) zum Ausstoßen der Druckluft aus der Gondel umfasst.

8. Gondel (1) nach Anspruch 6 oder 7, **dadurch gekennzeichnet, dass** die Wärmeschutzeinlage (37) in der Nähe der Ausstoßschlitze (35) eine Ziegelabdeckung (38) aufweist, die dazu geeignet ist, eine Verformung der Platte (21) zu erlauben, ohne den Wärmeschutz zu beeinträchtigen.

9. Gondel (1) nach einem der Ansprüche 1 bis 8, **dadurch gekennzeichnet, dass** die Platte (21) mindestens eine Schauklappe (33, 34) mit geradlinigen (52) oder festonierten (53) Ausschnitten umfasst.

10. Gondel (1) nach Anspruch 9, **dadurch gekennzeichnet, dass** umlaufende Dichtungen (51) mit den Ausschnitten (52; 53) der Schauklappe(n) (33; 34) verknüpft sind.
